# EUROPEAN PATENT APPLICATION

(11) **EP 2 258 213 A2**
(43) Date of publication of application: **08.12.2010**
(21) Application number: 10178848.7
(22) Date of filing: 17.11.2005
(51) Int. Cl.: A23L 1/217, A23L 1/216, A23L 1/015, A23L 1/212, C12N 9/82

(54) **Process for reducing acrylamide**

(30) Priority: 17.11.2004 US 628726 P
(62) Divisional of application: 05803254.1
(71) Applicant: Novozymes A/S, 2880 Bagsvaerd (DK); Procter & Gamble, Inc., Cincinnati, OH 45202 (US)
(72) Inventor: Hendriksen, Hanne Vang, 2840, Holte (DK); Stringer, Mary, 2880, Bagsvaerd (DK); Ernst, Steffen, 2700, Broenshoej (DK); Heldt-Hansen, Hans, 2830, Virum (DK); Schafermayer, Richard Gerald, Glendale, OH 45231 (US); Corrigan, Patrick Joseph, Glendale, OH 45246 (US)
(74) Representative: Kofoed, Gertrud Sonne

(57) **Abstract**

The present invention relates to a process for production of cooked vegetable food materials having reduced levels of acrylamide.

## Description

The present invention relates to a process for production of a cooked vegetable food material, such as a fried or baked vegetable food material, having reduced levels of acrylamide.

### FIELD OF THE INVENTION

Many carbohydrate-containing fried vegetable food materials, such as fried potato products, e.g. French fries may comprise acrylamide. Acrylamide is suspected of having a carcinogenic potency and therefore consumers have voiced concern. Accordingly, it is an object of the present invention to provide a process for reducing the level of acrylamide in fried vegetable food materials. It is also an object of the present invention to provide fried vegetable food materials having reduced levels of acrylamide.

### BACKGROUND OF THE INVENTION

Acrylamide is formed in several food materials during heating to high temperatures. The acrylamide formation has been ascribed to a Maillard reaction wherein asparagine is one of the reactants. It is well-known that acrylamide formation in fried vegetable food materials may be reduced by a treatment reducing the amount of asparagine in the vegetable food materials, such as by subjecting the vegetable food materials to the action of the enzyme asparaginase. A fried vegetable food material, e.g. French fries, may typically be produced in a process comprising washing, peeling, cutting, blanching, parfrying, optionally freezing, and a final fry. US2004/0058046 A1 discloses a process for reducing acrylamide in e.g. French fries.

### SUMMARY OF THE INVENTION

In a first aspect the present invention provides a process comprising the steps of; a) providing a vegetable food material; b) contacting said vegetable food material with a cellulase enzyme to form a cellulase-treated vegetable food material; and c) contacting the cellulase-treated vegetable food material with an asparagine-reducing enzyme to form a vegetable food material having a reduced level of asparagine; wherein step b) is performed prior to, simultaneously with, or after step c).

In a second aspect the present invention provides a process comprising the steps of; a) providing a vegetable food material; b) par-frying said vegetable food material; c) optionally freezing and/or thawing the parfried vegetable food material; and d) contacting the parfried vegetable food material with an asparagine-reducing enzyme.

In a third aspect the present invention provides a process comprising the steps of; a) providing a vegetable food material; b) blanching said vegetable food material; c) drying said vegetable food material; and; d) contacting said vegetable food material with an asparagine-reducing enzyme.

### DETAILED DESCRIPTION OF THE INVENTION

The applicants of the present invention have discovered that in a process for production of a fried vegetable food material, e.g. French fries, or a parfried vegetable food material, e.g. for producing French fries after a final fry, the effect of an asparagine-reducing enzyme treatment can be further enhanced by contacting the vegetable material, e.g. the parfried potato pieces, with a cellulase enzyme activity prior to or simultaneously with the contacting with an asparaginase-reducing enzyme. The applicants of the present invention have also discovered that an asparagine-reducing enzyme treatment at a process step following the parfrying step is unexpectedly efficient for reducing the final acrylamide content. The asparagine-reducing enzyme treatment at a process step following the parfrying step may be the only asparagine-reducing enzyme treatment needed or it may be performed as a second asparagine-reducing enzyme treatment following a first asparagine-reducing enzyme treatment prior to the parfrying step. Additional reduction can be achieved by various treatments prior to the asparagine-reducing enzyme treatment, such as by introducing a drying step and/or a freezing/thawing step before the asparagine-reducing enzyme treatment of the vegetable material, e.g. the parfried potato pieces.

By the term "asparagine-reducing treatment" is understood a treatment which removes or eliminates asparagine in a material subjected to the treatment thereby reducing the amount of asparagine present in said material. Likewise, by the term "asparagine-reducing enzyme" is understood an enzyme which reduces the amount of asparagine in a material. The term "asparagine-reducing enzyme" is used without regard to the enzymatic mechanisms of said enzyme.

Without being limited by theory the additional effect of the asparagine-reducing enzyme treatment following the first parfry on acrylamide reduction is believed to be due to the removal of the asparagine transported to the surface during the previous processing steps. The additional effect observed of the asparagine-reducing enzyme treatment following freezing/thawing and/or drying may be caused by a deeper penetration of the applied enzymes due to cell wall damage as well as increased transport of asparagine from within to the surface of the material, e.g. potato pieces.

Keeping cell components within the living cell is crucial to cell viability. Many cells use active transport to maintain concentrations of important components within the cell at a higher level than that permitted by osmosis. Because of this principle it can be difficult to extract certain components from cells. While not being limited by theory, it is believed that asparagine is located in the cellular structure of food materials; this can make the asparagine not readily available for extraction. Applicants have found that by altering the cell wall and/or membrane structure to enhance permeability, the extraction efficiency of asparagine can be greatly enhanced.

Vegetable food material cell wall membranes can be altered to increase asparagine extraction by any suitable means including, but not limited to, heating (e.g., conductive, convective, radiant, microwave, infrared), osmotic pressure alteration, altering the pH of the cell's environment, treatment with one or more enzymes (e.g., cellulose-degrading enzymes such as cellulase, hemicellulase, or mixtures thereof), freeze-thaw cycles, other means of cellular membrane disruption (e.g. ultrasonication), or combinations thereof.

Blanching can be used to alter the cell membrane. During blanching, cell permeability can be affected in various ways. For example, the cell contents can be enlarged (e.g., due to starch gelatinization), causing the cell wall and/or membrane to rupture. Furthermore, the heat can denature the cellular membrane proteins, resulting in cellular leakage. This can result in increased extraction efficiency of asparagine. The blanching treatment can be selected from the group consisting of wet blanching, steam blanching, microwave blanching, and infrared blanching.

The invention may be applied to the processing of any vegetable material suitable as a vegetable food material. Preferably the vegetable food material is derived from a vegetable tuber or root such as but not limited to the group consisting of potato, sweet potato, yams, yam bean, parsnip, parsley root, Jerusalem artichoke, carrot, radish, turnip, and cassava. A preferred raw product for the invention is potato.

The processing of a vegetable tuber or root into a suitable vegetable food material may comprise e.g. rinsing, washing, peeling, cutting etc. such as to produce tuber or root pieces, e.g. potato pieces, of any size and/or shape, e.g. the form of, strips or slices, e.g. of a size and/or shape suitable for further processing into a cooked vegetable food product such as e.g. French fries or into a parfried potato product suitable for making e.g. French fries.

The contacting with the asparagine-reducing enzyme or the cellulase enzyme of the various aspects of the present invention is preferably accomplished by dipping, soaking or coating the vegetable food material in an aqueous enzyme solution or a mixture containing said enzymes. Preferably said asparagine-reducing enzyme is asparaginase.

In a preferred embodiment of the first aspect the vegetable food material having a reduced level of asparagine is further heated to form a cooked vegetable food material. In a more preferred embodiment the cooked vegetable food material is a fried potato product, and in an even more preferred embodiment the cooked vegetable food material is a French fry.

In the first aspect of the invention a cellulase treatment is introduced prior to or simultaneous to the asparagine-reducing enzyme treatment. The cellulase is capable of modifying the permeability of the vegetable food material, e.g. potato pieces, thereby increasing infiltration of the asparagine-reducing enzyme, as well as increasing leaking of asparagine to the surface of the vegetable food material, e.g. potato pieces, thereby making the asparagine accessible to the action of the asparagine-reducing treatment.

In the second aspect of the present invention a process is provided, comprising the steps of providing a vegetable food material; par-frying said vegetable food material; and contacting the parfried vegetable food material with an asparagine-reducing enzyme. The vegetable food material may also be contacted with an asparagine reducing enzyme prior to parfrying. In a preferred embodiment the food material is further subjected to freezing and thawing, said freezing and thawing being performed at a process step prior to the contacting with an asparagine-reducing enzyme.

In further preferred embodiments of the previous aspects, the vegetable food material, e.g. potato pieces, may, prior to an asparagine-reducing enzyme treatment be subjected to drying and/or vegetable food material, e.g. potato pieces, may be subjected to soaking in water to remove asparagine from the vegetable food material.

The parfried vegetable food material of the second aspect is preferably, after contacting with an asparagine-reducing enzyme, heated, e.g. fried, to form a cooked vegetable food material. More preferred the parfried vegetable food material of the second aspect is frozen to produce a frozen parfried vegetable food material, which may be stored and later cooked to produce a cooked vegetable food product, such as a fried vegetable food product, e.g. French fries. In a preferred embodiment a second parfrying is performed, said second parfrying being performed after the last contacting with an asparagine-reducing enzyme.

In a first preferred embodiment of the second aspect, the present invention provides a process comprising the steps of; a) washing and/or peeling a potato; b) cutting the washed and/or peeled potato in suitable pieces; c) optionally blanching the potato pieces; d) optionally drying the potato pieces; e) optionally contacting the potato pieces with an asparagine-reducing enzyme; f) optionally drying the potato pieces; g) parfrying the potato pieces; h) optionally cooling the potato pieces; i) contacting the potato pieces with an asparagine-reducing enzyme, and; j) optionally freezing the potato pieces.

In a second preferred embodiment of the second aspect, the present invention provides a process comprising the steps of; a) washing and/or peeling a potato; b) cutting the washed and/or peeled potato in suitable pieces; c) optionally blanching the potato pieces; d) optionally cooling the potato pieces; e) optionally contacting the potato pieces with an asparagine-reducing enzyme; f) optionally drying the potato pieces; g) parfrying the potato pieces; h) freezing and thawing the potato pieces; i) contacting the potato pieces with an asparagine-reducing enzyme; j) optionally freezing the potato pieces.

In a third preferred embodiment of the second aspect, the present invention provides a process comprising the steps of; a) washing and/or peeling a potato; b) cutting the washed and/or peeled potato in suitable pieces; c) optionally blanching the potato pieces; d) optionally contacting the potato pieces with an asparagine-reducing enzyme; e) optionally drying the potato pieces; f) parfrying the potato pieces; g) optionally cooling the potato pieces; h) contacting the potato pieces with an asparagine-reducing enzyme; i) parfrying the potato pieces, and; j) optionally freezing the potato pieces.

In a fourth preferred embodiment of the second aspect, the present invention provides a process comprising the steps of; a) washing and/or peeling a potato; b) cutting the washed and/or peeled potato in suitable pieces; c) optionally blanching the potato pieces; d) optionally contacting the potato pieces with an asparagine-reducing enzyme; e) optionally drying the potato pieces; f) optionally contacting the potato pieces with an asparagine-reducing enzyme; g) parfrying the potato pieces; h) freezing and thawing the potato pieces; i) contacting the potato pieces with an asparagine-reducing enzyme; j) parfrying the potato pieces, and; k) optionally freezing the potato pieces.

In a fifth preferred embodiment of the second aspect, the present invention provides a process comprising the steps of; a) washing and/or peeling a potato; b) cutting the washed and/or peeled potato in suitable pieces; c) optionally blanching the potato pieces; d) optionally contacting the potato pieces with an asparagine-reducing enzyme; e) optionally drying the potato pieces; f) optionally contacting the potato pieces with an asparagine-reducing enzyme; g) optionally parfrying the potato pieces; h) freezing and thawing the potato pieces; i) contacting the potato pieces with an asparagine-reducing enzyme; j) parfrying the potato pieces, and; i) optionally freezing the potato pieces.

In the third aspect the blanched vegetable food material, e.g. potato pieces, such as strips, is dried before being contacted with an asparagine-reducing enzyme. The drying may comprise application of heat and/or vacuum. Suitable dryers can be selected from drying devices including but not limited to hot air dehydrators, vacuum ovens, drum dryers, fluidized bed dryers, scraped wall heat exchangers, drum dryers, freeze-dryers or air lift dryers. During the drying process the moisture content of the blanched vegetable food material is reduced by at least 5%, preferably at least 10%, more preferably at least 15%, still more preferably at least 25%, and even more preferably at least 30%, such as at least 35%.

Without being bound by theory the additional effect observed following treatment with an an asparagine-reducing enzyme after drying is believed inter alia to be due to a flow of water from cell layers within the vegetable food material outwards to more peripheral cell layers during the drying process; asparagine dissolved in this water is thus transported to the outer layers of the vegetable food material, e.g. potato pieces, and as the asparagine is drawn closer to the surface of the vegetable food material it becomes more susceptible to the action of the asparagine-reducing enzyme during the following enzyme treatment. Furthermore, some of the additional effect observed following treatment after drying may be due to increased absorption of the enzyme solution by the dried vegetable material.

In a preferred embodiment of the third aspect the vegetable food material contacted with an asparagine-reducing enzyme is parfried to produce a parfried vegetable food material. The parfried vegetable food material is preferably subjected to a final fry to produce a fried vegetable food material, or it is frozen to produce a frozen parfried vegetable food material, which e.g. after freeze storage may be subjected to a final fry to produce a fried vegetable food material.

Contacting the vegetable food material, e.g. tuber or root material, e.g. potato pieces, with the asparagine-reducing enzyme may be performed by dipping, soaking or coating the food material in a solution or a mixture containing said asparagine-reducing enzyme. Preferably the asparagine-reducing enzyme is applied by incubation in an aqueous solution comprising an asparagine-reducing enzyme or by spray coating with an aqueous solution comprising an asparagine-reducing enzyme. Vacuum may be applied to increase infiltration of the solution into the vegetable food material, e.g. potato pieces. During the contacting with an asparagine-reducing enzyme the surface temperature of the food material and/or the solution or mixture comprising the asparagine-reducing enzyme is preferably held within a range suitable for allowing enzyme to function. Preferably the temperature is from about 5 to 80°C, more preferably from about 10 to 70°C, yet more preferably from about 20 to 50°C, even more preferably from about 30 to 45°C, and most preferably about 40°C.

The treatment with asparagine-reducing enzyme may be used in combination with addition of CaCl₂, by soaking or other non-enzymatic acrylamide-reducing measures.

The vegetable food material may after the contacting with an asparagine-reducing enzyme may be further heated to form a cooked vegetable food material; preferably it is fried to form a fried potato product, and more preferably it is fried to form French fries.

If coated French fries are desired, a suitable coating material, such as starch or a blend of materials comprising one or more starches, can be used to coat the potato pieces.

The amount of asparagine-reducing enzyme to add in the various aspects of the present invention can depend upon the level of asparagine reduction, and accordingly the level of acrylamide reduction, that is desired. The amount of enzyme to add can also depend upon the amount of asparagine present in the vegetable food material, e.g. potato pieces; food material higher in asparagine will generally require increased levels of enzyme and/or increased reaction time to achieve the same level of acrylamide reduction. The amount of enzyme to add can also depend upon the particular enzyme used (for example, the particular enzyme's ability to degrade asparagine) and the particular root or tuber material, e.g. potato, treated. One skilled in the art will be able to determine the effective amount of enzyme based upon the specific food material, the specific enzyme, the enzyme's specific activity, and the desired result.

The cooked vegetable food material of the previous aspects, e.g. a fried potato product such as French fries, or French fries e.g. made from the parfried vegetable food material of the previous aspects, can have less than about 400 ppb acrylamide, preferably less than about 300 ppb, more preferably less than about 200 ppb, even more preferably less than about 100 ppb, and most preferably less than 80 ppb, such as less than 60 ppb, less than 40 ppb or even less than 20 ppb.

Preferably, the level of acrylamide in the cooked vegetable food material of the previous aspects, e.g. a fried potato product such as French fries, or French fries e.g. made from the parfried vegetable food material of the second aspect, is reduced by at least about 10%, preferably at least about 30%, more preferably at least about 50%, still more preferably at least about 70%, and even more preferably at least about 90%.

The asparagine-reducing enzyme is preferably an asparaginase. For the invention any suitable asparagine-reducing enzyme may be applied. Preferably the asparagine-reducing enzyme is an asparaginase (EC 3.5.1.1). Preferred are microbial asparaginases, e.g. an asparginase derived from a bacteria or a fungi. The asparaginase may be derived from *Erwinia chrysanthemii*, *Saccharomyces cerevisiae, Candida utilis*, *Escherichia coli, Aspergillus oryzae*, *Aspergillus nidulans, Aspergillus niger, Aspergillus fumigatus*, *Fusarium graminearum*, or *Penicillium citrinum.* It may be an asparaginase having the amino acid sequence shown in SEQ ID NO:2 or an amino acid sequence having at least, at least 50%, at least 69%, at least 70%, at least 80%, or at least 90% homology to SEQ ID NO:2. Such an asparaginase may preferably be derived from *Aspergillus oryzae.* Preferably the asparagine-reducing enzyme, preferably an asparaginase, is used in amounts of 10 to 5.000.000 Units per kg of vegetable solids, more preferably in amounts of 100 to 500.000 Units per kg of vegetable solids, even more preferably in amounts of 1000 to 50.000 Units per kg of vegetable solids, yet more preferably in amounts of 10.000 to 30.000 Units per kg of vegetable solids.

The cellulase enzyme is preferably a composition comprising cellulase activity preferably derived from *Trichoderma reesei,* such as the commercial product Celluclast® available from Novozymes A/S. Other commercially available cellulases, which may be used include CELLUZYME® (available from Novozymes A/S), SPEZYME® CP (available from Genencor, USA) and ROHAMENT® 7069 W (available from Röhm, Germany).

### METHODS AND MATERIALS

### Asparaginase activity assay

An asparaginase unit is defined as the amount of enzyme needed to generate 1.0 micromole of ammonia in 1 minute at 37°C and pH 8.6.

### Stock solutions

50 mM Tris buffer, pH 8.6
189mM L-Asparagine solution
1.5 M Trichloroacetic Acid (TCA)
Nessler's reagent, Aldrich Stock No. 34,514-8 (Sigma-Aldrich, St. Louis, Mo. USA) Asparaginase, Sigma Stock No. A4887 (Sigma-Aldrich, St. Louis, Mo. USA)

### Enzyme reaction:

500 microL buffer
100 microL L-asparagine solution
350 microL water
are mixed and equilibrated to 37 °C.
100 microL of enzyme solution is added and the reactions are incubated at 37 °C for 30 minutes.
The reactions are stopped by placing on ice and adding 50 microL of 1.5M TCA.
The samples are mixed and centrifuged for 2 minutes at 20,000 g

### Measurement of free ammonium:

50 microL of the enzyme reaction is mixed with 100 microL of water and 50 microL
of Nessler's reagent. The reaction is mixed and absorbance at 436nm is measured after 1 minute.

### Standard:

The asparaginase stock (Sigma A4887) is diluted 0.2, 0.5, 1, 1.5, 2, and 2.5 U/ml.

### Enzymes

An asparagine-reducing enzyme composition comprising 6800 Units/ml of an asparginase having the amino acid sequence shown in SEQ ID NO:2.
A cellulase enzyme composition derived from *Trichoderma reesei*, available such as the commercial product Celluclast® from Novozymes A/S (Celluclast 1.5 L FG, density 1.2 g/l, activity 700 EGU/g).

### EXAMPLES

### Example 1

Large-sized Bintje potatoes were peeled and cut into strips approximately 8x8x75 mm using a French fry iron. Blanching was performed by pouring hot water (90°C) over the potato strips and incubating the strips in the blanching water at 70°C for 20 min in a water bath. The potato strips were dried at 85°C in a heating chamber with air circulation for 10 min. The potato strips were parfried for 1 min. at 175°C in Fritao oil followed by drip drying at room temperature for 10 min and freezing at -18°C for at least 24 hrs. Thawing was performed by incubation at 20°C for 2 hrs. The second frying was performed for 3 min. at 175°C in Fritao oil. All treatments comprised 300g of potato strips and were done in duplicate. An asparaginase treatment comprised incubation at 40 °C in 500 ml buffer (0.50 mM KH₂PO₄, pH 6) with 5000 asparaginase U/I for 20 min. Blank treatment comprised incubation in buffer without enzyme. The acrylamide content was measured after the final frying using LC-MS/MS.

Table 1 shows results from experiments where asparaginase treatment was performed or not after blanching and after parfrying. The process set-up used for the tests in table 1 was:
1. Wash, peel, cut
2. Blanch
3. First treatment
   a. No treatment = None
   b. Incubation with (= Asparaginase) or without (=Blank) enzyme
4. Drying
5. Parfrying
6. Second treatment
   a. No treatment = None
   b. Incubation with (= Asparaginase) or without (=Blank) enzyme
7. Freezing
8. Final fry of frozen fries

**Table 1. 1st asparaginase treatment after blanching, 2nd treatment after parfrying.**

| **1st treatment** | **2nd treatment** | **Acrylamide ppb** |
|---|---|---|
| None | Asparaginase | 99 |
| None | Blank | 270 |
| Asparaginase | None | 120 |
| Blank | None | 340 |
| Asparaginase | Asparaginase | <30 |
| Blank | Blank | 120 |

A second asparaginase treatment after parfrying reduces acrylamide below 30 ppb compared to just the treatment after blanching giving 120 ppb. Using a second treatment but incubating without enzyme is less efficient giving 120 ppb.
Using a similar set-up as above the 2^{nd} treatment was performed after the freezing step. Prior to treatment the fries were thawed for 2hrs. Table 2 shows the results. To illustrate the effect of thawing final frying was done directly on a set of frozen and frozen/thawed fries. These had only a 1 st treatment right after blanching. The process set-up used for the tests in table 2 was:
1. Wash, peel, cut
2. 1 Blanch
3. First treatment
   a. Incubation with (= Asparaginase) or without (=Blank) enzyme
4. Drying
5. Parfrying
6. Freezing
7. Optionally thawing
8. Second treatment
   a. No treatment = None
   b. Incubation with (= Asparaginase) or without (=Blank) enzyme 9. Final fry of frozen or thawed fries

**Table 2. 1^{st} treatment after blanching, 2^{nd} treatment after freezing and/or thawing. None = no treatment**

| **1st treatment** | | **2nd treatment** | **Acrylamide ppb** |
|---|---|---|---|
| Blank | Frozen | None | 490 |
| Asparaginase | Frozen | None | 330 |
| Blank | Frozen /Thawed | None | 900 |
| Asparaginase | Frozen /Thawed | None | 1000 |
| Asparaginase | Frozen /Thawed | Asparaginase | 200 |
| Asparaginase | Frozen /Thawed | Blank | 450 |
| Blank | Frozen /Thawed | Asparaginase | 250 |
| Blank | Frozen /Thawed | Blank | 570 |

Thawing prior to the final fry increased acrylamide levels unless followed by an asparaginase or blank treatment. Significantly lower acrylamide levels were obtained by a late treatment of the fries after freezing and thawing prior to the final fry.
Using a similar set-up the 2^{nd} treatment was performed after the drying step. The process set-up used for the tests in table 3 was:
1. Wash, peel, cut
2. Blanch
3. First treatment
   a. No treatment = None
   b. Incubation with (= Asparaginase) or without (=Blank) enzyme
4. Drying
5. Second treatment
   a. No treatment = None
   b. Incubation with (= Asparaginase) or without (=Blank) enzyme
6. Parfrying
7. Freezing
8. Final fry of frozen fries

**Table 3. 1^{st} treatment after blanching, 2^{nd} treatment after drying.**

| **1st treatment** | **2nd treatment** | **Acrylamide, ppb** |
|---|---|---|
| None | Asparaginase | 160 |
| None | Blank | 200 |
| Asparaginase | None | 150 |
| Blank | None | 350 |
| Asparaginase | Asparaginase | 76 |
| Blank | Blank | 120 |

Introducing a second enzyme treatment after drying (in addition to the 1^{st} treatment after blanching) reduces acrylamide to 76 ppb compared to just 2 soaking steps without enzyme giving 120 ppb. Single treatments with or without enzyme results in higher acrylamide levels than double treatments

### Example 2

2A. About 250 ml of distilled water was added to a 400 ml glass jar, the jar was capped, and placed in a constant temperature bath (Precision Series 280 Water Bath) for about 30 minutes until the temperature of the distilled water in the jar was uniformly 74°C. One large Russet Burbank potato was peeled, and about 20 mm of each long end of the potato was cut off. The peeled potato was placed in a French fry slicer (Progressive Jumbo Potato Cutter Model GPC-3664), and cut into strips each about 8 mm thick. The potato strips were sorted and any fry with a curved edge or otherwise not perfectly rectangular in shape was discarded. Of the remaining potato strips about 100 g of raw potato strips were weighed, and then added to the jar of 74°C water to blanch for about 15 minutes. The blanched potato strips were then placed in a bowl of about 800 ml of tap water and swirled by hand for about 10 seconds. This rinsing procedure was repeated twice, each time using about 800 ml of fresh tap water. After the third rinse, the potato strips were dumped into a strainer and drained, and then patted dry with a paper towel. The potato strips were then par-fried for 60 seconds at about 190°C in a Euro-Pro Model F1066 fryer, and then dumped onto a paper towel to drain for about 1 minute. The potato strips were then lined up in a single layer and sealed in aluminium foil and placed in a bed of dry ice for about 30 minutes (the dry ice completely surrounds the potato strips). After about 30 minutes the frozen potato strips were removed from the dry ice and fried for 4 minutes at about 165 °C. The fried potato strips, i.e. French fries, were then drain on a paper towel for about 1 minute. These fries were analyzed to have about 728 microL/kg acrylamide.
2B. The same procedure was used as in 2A, except after the 15 minute blanching step, the potato strips were dumped from the jar into a strainer, drained, and added to about 250 ml of distilled water in a 400 ml glass jar. The jar was capped, and the potato strips were allowed to soak in the distilled water at room temperature (about 25°C) for about 30 minutes. During this soaking period the jar was swirled by hand for about one minute, every eight minutes. After about 30 minutes of soaking, the potato strips in the jar were dumped into a strainer and drained. The potato strips were then rinsed three times, par-fried, frozen, and finish-fried as described in 2A. These fried potato strips, i.e. French fries, were analyzed to have about 240 microL/kg acrylamide. This shows that just soaking the potato strips in distilled water after blanching can reduce the acrylamide level in the finished fries.
2C. The same procedure was used with these potato strips as in 2B, except for the 60 minute soaking step, about 150 microL of Celluclast cellulase was added to the 250 ml of distilled water along with the blanched potato strips. After about 60 minutes of soaking, the potato strips in the jar were dumped into a strainer and drained. The potato strips were then rinsed three times, par-fried, frozen, and finish-fried as described in 2A. These fries were analyzed to have about 196 microL/kg acrylamide. This example shows that soaking the fries in a cellulase solution after blanching can reduce the acrylamide level beyond just soaking alone.
2D. The same procedure was used with these potato strips as in 2B, except prior to the 60 minute soaking step, about 5100 units of asparaginase per kg of potato solids was added to the 250 ml of distilled water along with the blanched potato strips. After about 60 minutes of soaking, the potato strips in the jar were dumped into a strainer and drained. The potato strips were then rinsed three times, par-fried, frozen, and finish-fried as described in 2A. These fries were analyzed to have about 140 microL/kg acrylamide. This example shows that soaking the potato strips in an asparaginase solution after blanching can reduce the acrylamide level beyond either just soaking alone or soaking in a cellulase solution.
2E. The same procedure was used with these potato strips as in 2B, except for the 60 minute soaking step, about 150 microL of Celluclast cellulase and about 5100 units of asparaginase per kg of potato solids were added to the 250 ml of distilled water along with the blanched potato strips. After about 60 minutes of soaking, the potato strips in the jar were dumped into a strainer and drained. The potato strips were then rinsed three times, par-fried, frozen, and finish-fried as described in 2A. These fries were analyzed to have about 99 microL/kg acrylamide. This shows that soaking the potato strips in a combination cellulase-asparaginase solution after blanching can reduce the acrylamide level beyond either just soaking alone or soaking in a solution of cellulase or asparaginase individually.
2F. The same procedure was used with these potato strips as in 2B, except that for the 60 minute soaking step, about 150 ml of distilled water was placed on a plate so that the solution layer was about 4 mm deep. The blanched potato strips were placed in the single layer on the plate, and after about 30 minutes the potato strips were turned over so that all sides of the potato strips were exposed to the water. After about 60 total minutes of soaking, the potato strips on the plate were dumped into a strainer and drained. The potato strips were then rinsed three times, par-fried, frozen, and finish-fried as described in 2A. These fries were analyzed to have about 469 microL/kg acrylamide. Because less water was used, fewer components that form flavour components were extracted from the potato strips during soaking compared to 2B. Therefore using less water in a thin layer around the surface of the potato strips can be a method to limit the extraction of fewer of the flavour components that were required for a superior consumer-acceptable French fry.
2G. The same procedure was used with these potato strips as in 2B, except for the 60 minute soaking step, about 5100 units of asparaginase per kg of potato solids was added to 150 ml of distilled water and the solution was placed on a plate so that the solution layer was about 4 mm deep. The blanched potato strips were placed in the single layer on the plate, and after 30 minutes the potato strips were turned over so that all sides of the potato strips were exposed to the enzyme solution. After about 60 total minutes of soaking, the potato strips on the plate were dumped into a strainer and drained. The potato strips were then rinsed three times, par-fried, frozen, and finish-fried as described in 2A. These potato strips were analyzed to have about 175 microL/kg acrylamide. In this example, the same amount of asparaginase was used as in 2D, and the reduction in acrylamide in the finished fries was in the similar range as that of 2C. However because less water was used, fewer components that form flavour and colour components were extracted from the fry as shown in 2F. Therefore using a more concentrated asparaginase solution in a thin layer around the surface of the potato strips can achieve adequate acrylamide reduction while extracting fewer of the colour and flavour components that were required for a superior consumer-acceptable French fry.

**Table 4. Summary of examples 2A through 2G**

| Exp.# | Blanch 74°C 15 min | Soak Solution | Rinse | Parfry 190°C 60 sec. | Freeze Dry Ice 30 min | Thaw | Fry 165°C 4 min. | Acrylam ide microL/ Kg |
|---|---|---|---|---|---|---|---|---|
| 2A | Yes | None | 3 times | Yes | Yes | No | Yes | 728 |
| 2B | Yes | Distilled water | 3 times | Yes | Yes | No | Yes | 240 |
| 2C | Yes | Cellulase | 3 times | Yes | Yes | No | Yes | 196 |
| 2D | Yes | Asparaginase | 3 times | Yes | Yes | No | Yes | 140 |
| 2E | Yes | Cellulase + Asparaginase | 3 times | Yes | Yes | No | Yes | 99 |
| 2F | Yes | Distilled water (only half depth | 3 times | Yes | Yes | No | Yes | 469 |
| 2G | Yes | Asparaginase (only half depth) | 3 times | Yes | Yes | No | Yes | 175 |

### Example 3

3A. About 250 ml of distilled water was added to a 400 ml glass jar, the jar was capped, and was placed in a constant temperature bath (Precision Series 280 Water Bath) for about 30 minutes until the temperature of the distilled water in the jar was uniformly 74°C. One large Russet Burbank potato was peeled, and about 20 mm of each long end of the potato was cut off. The peeled potato was placed in a French fry slicer (Progressive Jumbo Potato Cutter Model GPC-3664), and cut into Potato strips each about 8 mm thick. The potato strips were sorted and any fry with a curved edge or otherwise not perfectly rectangular in shape was discarded. Of the remaining potato strips about 100 g of raw potato strips were weighed, and then added to the jar of 74°C water to blanch for about 15 minutes. The blanched potato strips were then placed in a bowl of about 800 ml of tap water and swirled by hand for about 10 seconds. This rinsing procedure was repeated two more times, each time using about 800 ml of fresh tap water. After the third rinse, the potato strips were dumped into a strainer and drained, and then patted dry with a paper towel. The fries were then par-fried for 60 seconds at about 190 °C in a Euro-Pro Model F1066 fryer, and then dumped onto a paper towel to drain for about 1 minute. The fries were then lined up in a single layer and sealed in aluminium foil and placed in a bed of dry ice for about 30 minutes (the dry ice completely surrounded the fries). After about 30 minutes the frozen fries were removed from the dry ice and foil and were fried for 4 minutes at about 165 °C. The fries were then dumped onto paper towel to drain for about 1 minute. These fries were analyzed to have about 1711 microL/kg acrylamide. This is significantly higher than found in the previous example but illustrates the variation between different batch of potatoes.
3B. The same procedure was used with these fries as in 3A, except after the 15 minute blanching step, the fries were dumped from the jar into a strainer, drained, and added to a solution of about 20400 units of asparaginase per kg of potato solids in about 250 ml of distilled water in a 400 ml glass jar. The jar was capped, and the fries were allowed to soak in the solution at room temperature (about 25°C) for about 30 minutes. During this soaking period the jar was swirled by hand for about one minute, every eight minutes. After about 30 minutes of soaking, the fries in the jar were dumped into a strainer and drained. The fries were then rinsed three times, par-fried, frozen, and finish-fried as described in 3A. These fries were analyzed to have about 310 microL/kg acrylamide. This example shows that soaking the fries in an asparaginase solution after blanching can significantly reduce the acrylamide level.
3C. The same procedure was used with these fries as in A, except that after the par-frying step, the outer surface of the fries was brush coated with an aqueous solution having 3400 Asparaginase U/I. The fries were allowed to sit for 20 minutes, and then, frozen, and finish-fried as described in 3A. These fries were analyzed to have about 539 microL/kg acrylamide.
This example shows that just coating the outside of the fries with a dilute asparaginase solution after par frying (without the enzyme soak as shown in 3A ) can significantly reduce the acrylamide level.
3D. This Example combines the procedures of 3B and 3C. The same procedure was used with these fries as in 3A, except after the 15 minute blanching step, the fries were dumped from the jar into a strainer, drained, and added to a solution of about 20400 units of asparaginase per kg of potato solids in about 250 ml of distilled water in a 400 ml glass jar. The jar was capped, and the fries were allowed to soak in the solution at room temperature (about 25°C) for about 30 minutes. During this soaking period the jar was swirled by hand for about one minute, every eight minutes. After about 30 minutes of soaking, the fries in the jar were dumped into a strainer and drained. The fries were then rinsed three times and parfried. After the par-frying step, the outer surface of the fries was brush coated with an aqueous solution having 3400 Asparaginase U/I. The fries were allowed to sit for 20 minutes, and then, frozen, and finish-fried as described in 3A. These fries were analyzed to have about 138 microL/kg acrylamide. This example shows that the combination of soaking the fries in asparaginase solution prior to par frying, followed by coating the outside of the fries with a dilute asparaginase solution after par frying can reduce the acrylamide level in the finished fries more than either technique alone.

**Table 5. Summary of examples 3A through 3D**

| Exp.# | Blanch 74°C 15 min | 1^{st} Asparaginase Contacting Method | Rinse | Parfry 190°C 60 sec. | 2^{nd} Asparaginase Contacting Method | Freeze Dry Ice 30 min | Thaw | Fry 165°C 4 min. | Acryla mide microL /Kg |
|---|---|---|---|---|---|---|---|---|---|
| 3A | Yes | None | 3 times | Yes | None | Yes | No | Yes | 1711 |
| 3B | Yes | Soak in solution at 25°C 30 min | 3 times | Yes | None | Yes | No | Yes | 310 |
| 3C | Yes | Brush coat solution 20 min | 3 times | Yes | None | Yes | No | Yes | 539 |
| 3D | Yes | Soak in solution at 25°C 30 min | 3 times | Yes | Brush coat solution 20 min | Yes | No | Yes | 138 |

## Claims

1. A process comprising the steps of
a) providing a vegetable food material;
b) blanching said vegetable food material;
c) drying said vegetable food material; and
d) contacting the vegetable food material with an asparagine-reducing enzyme.

2. The process of claim 1 wherein the moisture content of the vegetable food material during the drying step is reduced by at least 5%.

3. The process of claim 2 further comprising a process step wherein the vegetable food material is parfried following step d).

4. The process of claim 3 further comprising a process step wherein the parfried vegetable food material is fried to produce a fried vegetable food material.

5. The process of claim 3 further comprising a process step wherein the parfried vegetable food material is frozen to produce a frozen parfried vegetable food material.

6. The process of claim 5 wherein the frozen parfried vegetable food material is fried to produce a fried vegetable food material.

7. The process of any of claims 1 to 6, wherein the contacting with the asparagine-reducing enzyme is accomplished by dipping, soaking or coating the vegetable food material in an aqueous enzyme solution or a mixture containing said asparagine-reducing enzyme.

8. The process of any of claims 1 to 7, wherein the asparagine-reducing enzyme is asparaginase.

9. The process of any of claims 1 to 8 wherein the vegetable food material is derived from a vegetable tuber or root selected from the group consisting of potato, sweet potato, yams, yam bean, parsnip, parsley root, Jerusalem artichoke, carrot, radish, turnip, and cassava.

10. The process of any of claims 3 to 9 wherein the fried vegetable food material is a French fry.

11. The process of any of claims 1 to 10 wherein the drying step is performed in a drying device selected from the list consisting of hot air dehydrators, vacuum ovens, drum dryers, fluidized bed dryers, scraped wall heat exchangers, freeze-dryers and air lift dryers.
